# EUROPEAN PATENT APPLICATION

(11) **EP 4 116 868 A1**
(43) Date of publication of application: **11.01.2023**
(21) Application number: 21183962.6
(22) Date of filing: 06.07.2021
(51) Int. Cl.: G06K 9/00, G06K 9/62, H01R 43/26

(54) **SYSTEM AND METHOD FOR CABLE PLUGGING ASSISTANCE**

(71) Applicant: Koninklijke Philips N.V., 5656 AG Eindhoven (NL)
(72) Inventor: GEURTS, Lucas Jacobus Franciscus, 5656 AE Eindhoven (NL); LAUTE, Niels, 5656 AE Eindhoven (NL); Du, Jia, 5656 AE Eindhoven (NL); TALGORN, Elise Claude Valentine, 5656 AE Eindhoven (NL); Bannenberg, Gijs, 5656 AE Eindhoven (NL)
(74) Representative: Philips Intellectual Property & Standards

(57) **Abstract**

Some embodiments are directed to a method of assisting a user plugging multiple cable heads attached to multiple cables into corresponding multiple cable sockets. For example, an image recognition algorithm may be applied to a series of images to detect cable heads and the cable sockets in which the detected cable heads are plugged into their corresponding cable sockets. When replugging, a guiding signal for guiding the unplugged cable head towards the corresponding unplugged cable socket is provided.

## Description

### FIELD OF THE INVENTION

The presently disclosed subject matter relates to a computer-implemented method to assist a user with plugging multiple cable heads attached to multiple cables into corresponding multiple cable sockets, a guiding system for guiding the plugging of multiple cable heads attached to multiple cables into corresponding multiple cable sockets, and a computer readable medium.

### BACKGROUND OF THE INVENTION

Despite the advent of wireless connections, such as Bluetooth or NFC, in many technical contexts, cables are still ubiquitous. In fact, many devices need a large number of cables of various types that all need to be plugged into the correct socket for the device to operate. One might, for example, encounter such devices in server racks and/or for communication distributing devices, e.g., routers. But they occur in all kinds of settings. A particularly important example is a medical context, where often multiple devices are used, interconnected with many cables. Again all cables need to be plugged in, to obtain correct function.

Plugging the right cable into the right cable socket is hard enough when the device is installed for the first time, but here time and guidance is often available, e.g., in the form of manuals or personnel which is in particular qualified for installing such devices. However, after the initial installation of a device, it may still be needed to unplug its cables, and to later re-plug them. There can be various reasons for that. For example, the device needs to be opened for service, or the device may have to be replaced. Especially in a medical context it is sometimes necessary to make quick replacement of a unit. For example, if a unit malfunctions during a medical procedure, it is often preferred to replace the unit outright, rather than to troubleshoot the problem during the procedure. In such a situation, multiple cables, potentially many, need to be unplugged and later re-plugged.

When unplugging many cables, it is difficult to plug them back in the right socket, especially if the person performing the procedure is not particularly trained for that procedure. Even field service engineers trained to replace modules that have a lot of cables attached to them, find it cumbersome to keep track of what cable was connected to a certain socket.

### SUMMARY OF THE INVENTION

It would be advantageous to have a system that addressed these and other issues. A computer-implemented method is proposed to assist a user in plugging multiple cable heads attached to multiple cables back into their corresponding multiple cable sockets. In particular, augmented reality (AR) may be used to give this support. For example, the multiple cable heads plugged into their corresponding cable sockets may be detected in a series of images received from an image sensor, e.g., a camera. Using the detected cables and sockets, the multiple cable heads can be associated with the correct corresponding cable sockets. Later, after a user unplugged the cable heads from the cable sockets, and is ready to replug, that is plug the cable head back in the cable socket, the user can be assisted. For example, an unplugged cable head and the associated corresponding unplugged cable socket may be detected and a guiding signal may be rendered to guide the user in replugging the detected unplugged cable head into its associated corresponding unplugged cable socket.

For example, a color may be assigned to a cable head and the corresponding cable socket. When the cable needs to be plugged back, the color may be projected onto the cable and/or cable head that is being moved and onto the corresponding cable socket When the connection is established, the guidance may be removed. An embodiment can thus provide a 'helping hand', e.g., by automatically labeling a cable when it is detached, e.g., visual using augmented reality, or auditive. This tool improves the interaction with machines as it is difficult to keep track of what cable was connected to what socket; especially when there are many similar cables connected to box or unit that needs to be replaced. If cables are not plugged back in correctly this leads to problems in testing or operation of a machine. In particular if removal and subsequent replugging needs to be done fast, e.g., during medical procedures, e.g., during surgical procedures such assistance an embodiment can help as less time is spent on finding the correct location of for cable heads to be plugged in. Embodiments can thus reduce downtime and the likelihood of failure due to incorrect connections.

Conventional applications of augmented reality headset rely on careful prepared scripts, e.g., to guide a user through a repair or the like. An advantage of embodiments is that no such preparation is needed. Embodiment can be applied in a wide range of replugging scenarios, without the need to provide the system with a script for the particular scenario, e.g., the particular device, socket board, or cables that are used. This makes embodiments useful, as they can quickly be usefully employed.

Some embodiments are directed to a method of assisting a user plugging multiple cable heads attached to multiple cables into corresponding multiple cable sockets. For example, an image recognition algorithm may be applied to a series of images to detect cable heads and the cable sockets in which the detected cable heads are plugged into their corresponding cable sockets. When replugging, a guiding signal for guiding the unplugged cable head towards the corresponding unplugged cable socket is provided.

A further aspect is a guiding method. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading.

### BRIEF DESCRIPTION OF THE DRAWINGS

Further details, aspects, and embodiments will be described, by way of example, with reference to the drawings. Elements in the figures are illustrated for simplicity and clarity and have not necessarily been drawn to scale. In the Figures, elements which correspond to elements already described may have the same reference numerals. In the drawings,
Fig. 1a schematically shows an example of an embodiment of a guiding system,
Fig. 1b schematically shows an example of an embodiment of a guiding system,
Fig. 1c schematically shows an example of an embodiment of a guiding system,
Fig. 2a schematically shows an example of an embodiment of a socket board,
Figs. 2b, 2c and 2d schematically show an example of an embodiment of a socket board,
Fig. 3 schematically shows an example of an association storage,
Fig. 4 schematically shows an example of an embodiment of a latent space storage,
Fig. 5a schematically shows an example of an embodiment of an augmented reality overlay,
Fig. 5b schematically shows an example of an embodiment of an augmented reality overlay,
Fig. 6 schematically shows an example of an embodiment of a guiding method,
Fig. 7a schematically shows a computer readable medium having a writable part comprising a computer program according to an embodiment,
Fig. 7b schematically shows a representation of a processor system according to an embodiment.

### Reference signs list

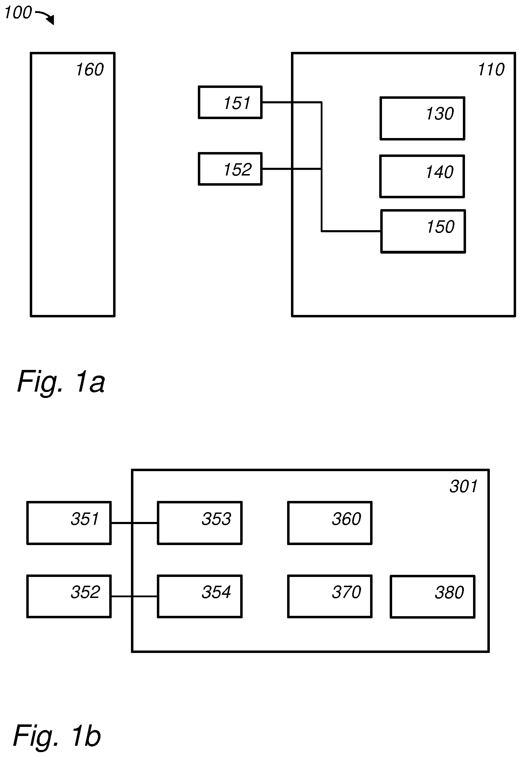

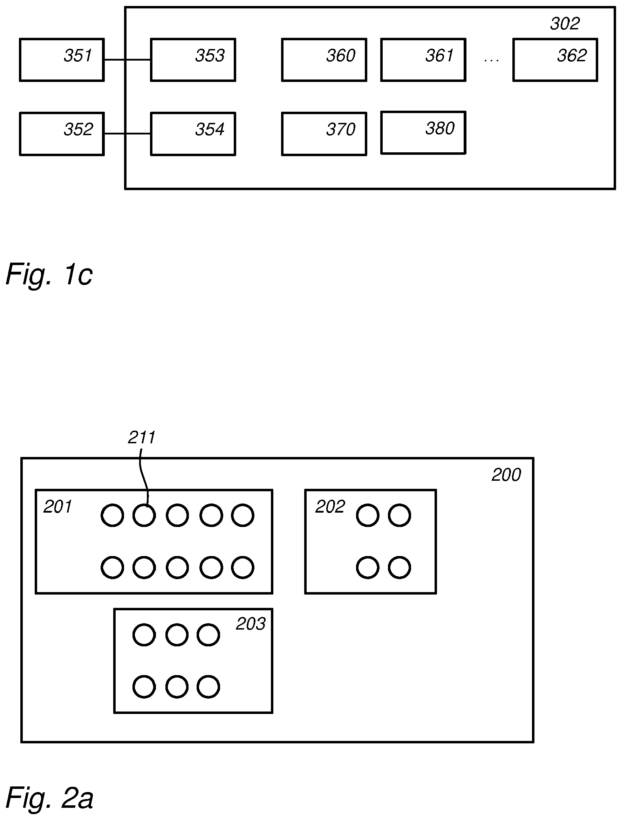

The following list of reference signs refers to Figs. 1-5b, 7a-7b, and is provided for facilitating the interpretation of the drawings and shall not be construed as limiting the claims.
- 100: a re-connecting system
- 110: a guiding system
- 130: a processor system
- 140: storage
- 150: communication interface
- 151: a camera
- 152: a visual projecting device
- 160: an electronic device
- 301, 302: a guiding system
- 351: a camera
- 352: a visual projecting device
- 353: an image sensor interface
- 354: a visual projecting interface
- 360: an image recognition unit
- 361-362: an image recognition subunit
- 370: a visual projecting unit
- 380: an association unit

- 200, 210: a socket board
- 201-203: a cluster of sockets
- 211: a cable socket
- 221,231,251: a cable
- 222, 232, 252: a cable head
- 223, 233, 243, 253: a cable socket
- 224, 225: visual guiding signal
- 260: an association storage
- 261: an association record

- 410: a latent space storage
- 401-403: state variables
- 420: a series of images
- 430: a latent space updating unit

- 510: an augmented reality headset
- 511, 512: an augmented reality overlay
- 513: a user
- 521: a virtual information panel
- 522: a visual guiding signal for a cable head
- 523: a hand
- 524, 525: a visual guiding signal for a cable socket
- 526: a cable head

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF THE EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims

Fig. 1a schematically shows an example of an embodiment of a guiding system 110. Guiding system 110 is configured to assist a user, e.g., a field service engineer, medical personnel, etc., with temporarily removing cables from a sockets board, e.g., to unplug and replug the cables. A cable terminates in a cable head, e.g., an electrical plug, an electrical connector, etc. Typically, a cable terminates in a single cable head, this is not necessary, for example, a single cable may correspond to, e.g., by connected to, multiple cable heads. The cable head is adapted for plugging, e.g., inserting, connecting, into a cable socket, e.g., an electrical connection port adapted to receive the cable head. Also shown in Fig. 1 is an electronic device 160. Electronic device 160 comprises multiple sockets, e.g., in the form of a socket board. There can be many cable heads and cable sockets, e.g., the number of cable heads and the number of corresponding cable sockets may be at least 5, at least 10, or at least 20, etc. Shown in Fig. 1 is an image sensor, e.g., a camera 151, and a rendering device, e.g., a visual projecting device 152. The image sensor is adapted to image the cable sockets and/or cables and/or cable heads. In an embodiment, camera 151 and projecting device 152 are combined into an augmented reality device, e.g., an augmented reality headset. Other options are possible, as discussed herein.

A guiding system, image sensor, rendering device and electronic device with socket board together form a re-connecting system. For example, guiding system 110, image sensor 151, projecting device 152 and electronic device 160 together form a re-connecting system 100.

Guiding system 110 may comprise a processor system 130, a storage 140, and a communication interface 150. Communication interface 150 is adapted to receive image signals from the image sensor and to send guiding signals to the rendering device, e.g., a visual projecting device.

Storage 140 may comprise local storage, e.g., a local hard drive or electronic memory. Storage 140 may comprise non-local storage, e.g., cloud storage. In the latter case, storage 140 may comprise a storage interface to the non-local storage.

Guiding system 110 may communicate internally, with other systems, external storage, input devices, output devices, and/or one or more sensors over a computer network. The computer network may be an internet, an intranet, a LAN, a WLAN, etc. The computer network may be the Internet. The system comprises a connection interface which is arranged to communicate within the system or outside the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

In system 110, the communication interface 150 may be used to send or receive digital data. For example, images may be received in digital form. For example, a guiding signal, e.g., an augmented reality overlay, or an auditive guiding signal may be sent in digital format.

The execution of system 110 may be implemented in a processor system, e.g., one or more processor circuits, e.g., microprocessors, examples of which are shown herein. The processor system may comprise one or more GPUs and/or CPUs. System 110 may comprise multiple processors, which may be distributed over different locations. For example, system 110 may use cloud computing.

Some of the figures, e.g., Figs. 1b, 1c, 3 and 4, show functional units that may be functional units of the processor system. For example, the figures may be used as a blueprint of a possible functional organization of the processor system. The processor circuit(s) are not shown separate from the units in these figures. For example, the functional units shown in a figure may be wholly or partially implemented in computer instructions that are stored at system 110, e.g., in an electronic memory of system 110, and are executable by a microprocessor of system 110. In hybrid embodiments, functional units are implemented partially in hardware, e.g., as coprocessors, e.g., graphic coprocessor e.g., for augmented reality processing, and partially in software stored and executed on system 110.

Guiding system 110 may be integrated in a single device but may also be distributed over multiple devices.

For example, the guiding system 110 may be located on the same premise as the device 160. Guiding system 110 may even be comprised in device 160. For example, guiding system 110 may be cloud based, e.g., off-premises, e.g., running on one or more external servers. The guiding signal may be sent to a local user, located at the location of device 160. The guiding signal may also, or instead, be sent to a further user, e.g., a provider of remote assistance. The guiding system may run at a computer located at the location of the remote assistance provider.

For example, in an embodiment, guiding system 110 is configured for use with two users. A first user uses a rendering device, e.g., he or she wears an augmented reality headset and he or she is located at the device 160. The second user can view the camera feed of the augmented reality headset, and can communicate with the first user. The guidance signal is preferably sent to the rendering device of the first user, and possibly also, or even instead, to the second user. A typical example of an image sensor and rendering device is an augmented reality headset.

Fig. 1b schematically shows an example of an embodiment of a guiding system 301. Guiding system 301 may be an embodiment of guiding system 110. For example, some or all of the units of guiding system 301 may be implemented in software units stored in storage 140 and configured for execution on processor 130. Shown in Fig. 1b is a camera 351 and a visual projecting device 352, which in an embodiment are combined in an augmented reality device. The camera 351 sends a series of digital images to an image sensor interface 353 of system 301. An image recognition unit 360 is configured to recognize and track objects in the series of images. For example, detected objects may include both cable sockets and cable heads. Preferably the cables themselves are also recognized and tracked to assist with the recognition and tracking of the cable heads.

Based on the information obtained in the image recognition unit 360, an association unit 380 maps which cable heads were plugged into which cable sockets and maintains this information.

A visual projecting unit 370 determines a guidance signal. For example, when unplugging, the guidance signal may comprise a visual confirmation that a particular cable was unplugged, or what it is for, etc. The visual projecting unit 370 determines a guidance signal when replugging the cables. For example, when replugging, the guidance signal may comprise a visual indication in which cable socket a particular cable should be plugged. The visual projecting unit may more generally be a rendering unit. For example, a rendering unit may be an auditive unit for generating an auditive guidance signal.

Visual projecting interface 354 is an example of a rendering interface. The rendering interface may also be an auditive interface for sending an auditive signal. Both the rendering interface and the image sensor interface are an example of a communication interface.

Fig. 1c schematically shows an example of an embodiment of a guiding system 302. The units of system 301 may be further subdivided into subunits, or additional units may be added which the units of 301 may call for assistance. For example, image recognition unit 360 may have a number of additional image recognition subunits; shown in Fig. 1c are image recognition subunits 361 and 362. An image recognition subunit can be configured to recognize in the series of images received from camera 361 a particular object or action. For example, one or more image recognition subunits may be configured to detect in the image series, disconnecting of a cables head from a cable socket, and/or an empty socket, and/or a re-plugging of a cable head, etc., Other examples are listed herein.

The detection of such objects and/or object movements may be used by the image recognition unit 360 to determine the current state of device 160, e.g., comprising the state of cables being plugged in or out. These may be expressed as logical rules in unit 360. For example, a rule may state that if a cable head X is detected in socket y, then cable head X and socket y are to be associated. The rule may be limited to a scanning phase before the actual unplugging. A further rule may state that if a cable head X is detected a guidance signal should be generated to guide cable head X to socket y, e.g., showing a color or the like on head X and socket y. This rule may be limited to a replugging phase and modified based on the heads and sockets that were previously detected during the scanning phase.

An embodiment may be used in multiple phases. For example, one may have the following phases: an optional preparation phase, a scanning phase, an unplugging phase and a replugging phase.

In the preparation phase, a user may prepare for best use of the guidance system. For example, in the preparation phase a user may add recognition assistance to the cables, e.g., labelling cables or head, e.g., with wireless or visual labels. For example, in the preparation phase a user may set up one or more stationary cameras. The camera's may be connected to the guidance system and used to recognize cable head and cable sockets. During the optional preparation phase, the guidance system need not yet be involved, although it could be, e.g., to instruct the user on appropriate preparation steps, e.g., in an information panel shown in the AR.

In the scanning phase, the guidance system may receive from an image sensor, e.g., a camera in an augmented reality device and/or a stationary camera, a series of images picturing a socket board comprising multiple sockets, e.g., a socket board of device 160. An image recognition algorithm is applied to the received series of images to detect at least part of the multiple cable heads and the cable sockets in which the detected cable heads are plugged into their corresponding cable sockets. The system may now associate detected cable head with the detected cable sockets in which they are plugged in. Association may use, e.g., a table recording the association. Association may be done by tracking which head came from which socket. A combination may also be used.

The scanning phase may be transparent to the user. The scanning may be done in the background by the system, in preparation of an unplugging that may or may not come in the future. The scanning phase may also be visible to the user. For example, in an augmented reality device, the system may announce to the user the scanning phase, and/or may indicate detected cable head and sockets. This is advantageous as it can prevent a user from unplugging a cable head that has not yet detected.

In the unplugging phase, the user unplugs cables from the cable sockets, e.g., is enabled to do so. The guidance system need not be involved in this phase, although it can be. For example, the guidance system may announce that it is safe to start unplugging. For example, during the unplugging phase, the guidance system may track cable heads, so that it can later advise which cable head is to be plugged into which cable socket. For example, the system may provide additional information about the cable and/or socket in an augmented reality overlay.

In the replugging phase, the user replugs cable heads into cable sockets. For example, the guidance system may detect in the series of images an unplugged cable head. The system retrieves which cable socket was previously associated with that cable head. The guiding signal guides the user towards the correct cable socket. For example, a visual marker, e.g., a color, a graphic, or the like may be projected near or on the associated cable socket to indicate to the user that this is the socket that he should plug the cable into.

If no associated cable socket was recorded, this can be signaled to the user instead. In that case, the user can be shown a snap-shot of the cables as they were plugged in, so that the user can make an assessment him or herself.

A visual guiding signal is typically projected with an augmented reality device, which may be a headset or an augmented reality capable device, e.g., a smartphone; this is an example of virtual projection as the projection is only visible to the user of the augmented reality device. The guiding signal may also be provided with different means. For example, in an embodiment the sockets are provided with a light, e.g., an LED. When the system detects a cable head, the light of the corresponding associated socket is turned on. In this way the user is guided towards the correct socket, without the need of an augmented reality device. This is physical projecting since other user can see the guiding signal even if they do not have access to an AR device.

A guiding signal is typically a visual guiding signal that is projected onto or around the cable socket, but it can also be auditive. An auditive guiding signal has advantages, as it requires much less demanding hardware. For example, in an embodiment, a camera and speaker can be used to implement an embodiment, without the need of an augmented reality headset. In the replugging phase, the system may detect the plugging of a cable socket and in response ceasing to display the guiding signal.

The guidance signal is particularly advantageous to point out the correct cable socket to the user, as the corresponding cable head may be implicit, e.g., the corresponding cable head typically is the cable head that the user is holding in his hand. However, a better guidance is obtained by indicating, e.g., in a visual overlay, both the cable head and the cable socket.

Fig. 2a schematically shows an example of an embodiment of a socket board 200. Socket board 200 is exemplary, and different organization are possible. For example, in an embodiment the socket board comprises multiple cable sockets of the same type, e.g., arranged together. For example, Fig. 2a shows that the cable sockets can be organized in clusters; shown are clusters 201, 202, and 203. Organization in clusters is not needed. In an embodiment, a socket board shows less organization although the socket board still has multiple cable sockets. For example, some communication devices, e.g., routers, may have many cable sockets of the same type. For example, some device, e.g., medical devices, may have many cable sockets of multiple different types.

In an embodiment, e.g., for use in case of more than, say, 30-50 cables, even with a guiding signal, e.g., color coding, it may still be difficult to identify individual cable. In this case, the guiding system may provide a first guiding signal, e.g., color, to a cluster of cables, e.g., according to the sections on the socket board where the cables come from. For example, a cluster of cables may be the cables unplugged from section or cluster 201.

Once the cables from the same section are sorted out by a user using first guiding signals on the cluster level, then a second guiding signal, e.g., a second layer of color coding may be applied in the embodiment. This way, the user can be guided to identify an individual cable from a large number of cables and connectors. This is particularly helpful when there are a lot of cables, looking identical to each other and which have to be applied to small surface in system.

A socket board is typically comprised in a side of an electronic device, e.g., a front side or a back side.

One may use an embodiment to replace a device. For example, one may scan cable heads and cable sockets, e.g., during a scanning phase, then unplug the multiple cable heads from the socket board of the electronic device, e.g., all cables. When the cables are removed, the device may be replaced with a new device, and the cable heads replugged into the new device using a guiding signal. For example, during a medical procedure it may be preferred to swap out a malfunctioning unit with another unit, rather than to troubleshoot it during the procedure.

For example, one may use an embodiment to repair or adapt a device. For example, one may scan cable heads and cable sockets, e.g., during a scanning phase, then unplug the multiple cable heads from the socket board of the electronic device, e.g., all cables. When the cables are removed, the device may be, say, be opened and repaired, e.g., a malfunctioning card may be swapped out, memory may be added, or some other adaptation to the device. When the adaptations are finished, the cable heads may be replugged into the adapted device using a guiding signal.

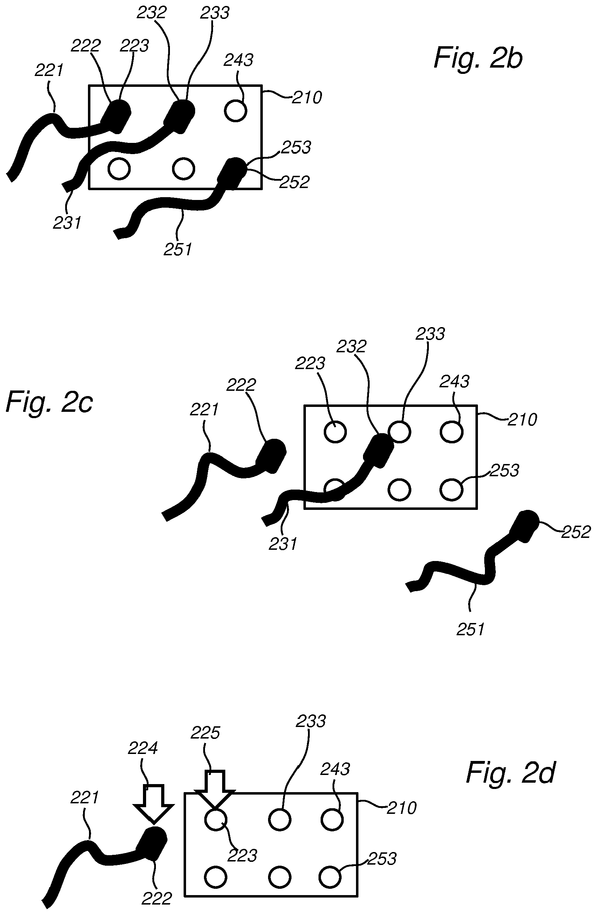

Figs. 2b, 2c and 2d schematically show an example of an embodiment of a socket board 210, and illustrate how an embodiment may operate.

Fig. 2b schematically shows an example of an embodiment of a socket board 210. Socket board 210 has six cable sockets, though the number of cable sockets may be different, e.g., at least two, at least six, at least 10, at least 20, etc. Cable sockets 223, 233, 243, are 253 shown with a reference number. Cable sockets 223, 233 and 253 are shown with a corresponding cable head plugged; shown are respectively cable heads 222, 232, and 252, and their corresponding cables 221, 231 and 251. Cable socket 243 is not plugged. Two more unplugged cable sockets are shown without a reference sign.

During an optional preparation phase, a user may apply a recognition marker to some or all of the cables and or cable sockets. During the optional preparation phase, a user may set up a camera, e.g., additional to a camera in an AR headset.

During a scanning phase, the guiding system applies an image recognition algorithm to images received from one or more cameras. In an embodiment, the camera(s) capture the socket board, and some of its surrounding, in particular, cable heads that are near the socket board.

An image sensor, e.g., camera, may be integrated in an augmented reality device. An image sensor, e.g., camera, may be a fixed camera for image sensing the socket board and/or the cables and/or cable heads. In an embodiment, having at least two cameras, of which at least one is fixed, provides advantages. Having a fixed camera makes it easier to detect and/or track objects. A fixed camera is also preferred for a remote user providing assistant. The non-fixed camera, e.g., in a handheld or headset, may be used for an augmented reality overlay. Having two cameras enables estimation of depth in the images, e.g., to create a depth map, e.g., by image recognition unit 360. Detecting the approach of a cable head towards a cable socket, or the withdrawing therefrom, is easier to detect in a depth map. In an embodiment, at least two fixed cameras are used to provide depth information, e.g., from which a depth map may be created. The depth map may be computed and then used as input to a neural network, e.g., a neural network for object detection or classification, for object tracking, or for updating a latent space.

In an embodiment, a camera is installed fixedly in a server rack for use with an embodiment when unplugging and replugging is needed in the server rack.

The scanning may be initiated by the user. The scanning may also be initiated by the system. For example, the guiding system may repeatedly store a snap-shot, e.g., a snapshot of the socket board without interaction with the user. Image recognition may be done on the snap-shots, e.g., before or after the unplugging. When a cable head plugged into a cable socket is detected, the cable head and socket are associated with each other, e.g., in an association table.

Fig. 2c schematically shows an example of an embodiment of a socket board 210. Shown in Fig. 2c, the unplugging has commenced. All of the cables heads 222, 232 and 252 are unplugged from socket board 210. In an embodiment, the guiding system performs an object tracking algorithm on the detected multiple cable heads and/or cables and/or the detected cable sockets in the series of images using an object classification and/or object tracking algorithm. For example, the position of cable head 222 may be tracked as it moves, e.g., as its position in the series of images changes.

Object tracking is advantageous, as it improves the likelihood of replugging the correct cable head in the correct cable socket. Tracking is not necessary though, for example, a cable head may be recognized in an image or images during replugging as being the same cable head that was previously unplugged. For example, a machine learnable model may assign a recognition vector to an image of a cable head. When two cable head have similar recognition vectors they may be regarded as the same. For example, a convolutional neural network may be trained to compute the recognition vector. For example, a recognition vector producing neural network may be obtained by a neural network autoencoder. For example, a recognition vector producing neural network may be obtained by an object recognition neural network. For example, a pretrained network may be used, e.g., trained on ImageNet, which is refined to classify cable heads. For example, a recognition vector may comprise an array of numbers, e.g., floating point numbers, recognition vectors of two different cable heads being different. Preferably, recognition vectors of two different cable heads differ more than a threshold, while recognition vectors of the same cable heads seen in different images differ less than a threshold. Difference may be measured as Euclidean distance. Various ways may be used to enhance recognition of a cable head as detailed herein.

Fig. 2d schematically shows an example of an embodiment of a socket board 210. After the cables have been unplugged as shown in Fig. 2c, the user may perform whatever is needed on the device of socket board 210; For example, replacing, repairing, or otherwise adapting the device. When the user is done, and replugging is needed, the user can be guided by an embodiment of the guiding system. For example, the guiding system may detect cable head 222 possibly together with cable 221. In the scanning phase it was stored that cable socket 223 corresponds to cable head 222, e.g., the association between cable head 222 and socket 223 was store. Accordingly, socket 223 is recognized in the series of images and a guiding signal is generated. Shown in Fig. 2d are visual guiding signal 224 at cable head 222 and visual guiding signal 225 at cable socket 223. The visual guiding signal 224 at cable head 222 is not strictly necessary, especially if it is clear from the context which cable head is in focus, e.g., the cable head that a user is holding in its hand. However, to reduce the probability of error, both visual guiding signals 224 and 225 are visible at the same time.

In this case, the guiding signal is a visual arrow projected near the object. The exact presentation of the guiding signal can vary in many ways. For example, the guiding signal may be a visual guiding signal. It is possible to physically show the guiding signal, e.g., by project light. In an embodiment, a light is installed with the socket, which may light up to indicate the appropriate socket for the detected cable head. A cable may also have an embedded light, which may light up, in response to a signal from the guiding system, to show that the cable head and socket correspond to each other.

A visual guiding signal may also be projected virtually on the socket, and/or the cable and/or cable head. Virtual projection uses an augmented reality device of the user, e.g., an augmented reality headset, or an augmented reality capable handheld device, such as a smartphone.

In an embodiment, a virtual visual guiding signal may comprise a color. The virtual visual guiding signal may comprise a virtual object, e.g., ring, halo, number, sign, a distinct pattern, etc. The virtual object can appear around the socket and cable. Using virtual objects in addition or instead of colors is helpful when there are many cables present that are difficult to be color coded in AR.

The guiding signal may be auditive. For example, an auditive guiding signal may indicate the cable socket. For example, a user may hold a cable head, this is recognized by the guiding system, the auditive guiding signal may tell the user to plug it into the corresponding cable socket, e.g., by playing 'plug the cable head in cable socket 23', 'into the top left cable socket', etc.

In an embodiment, the navigational instructions may be provided for positioning the cable and/or cable head towards the cable socket. For some complicated devices, a cable has to be positioned right. For example, a cable may not only have to be put in the correct cable socket, but also be guided through or in a cable fixture, such as a cable basket, cable trolley, cable duct, wiring harness, wire clips, and the like.

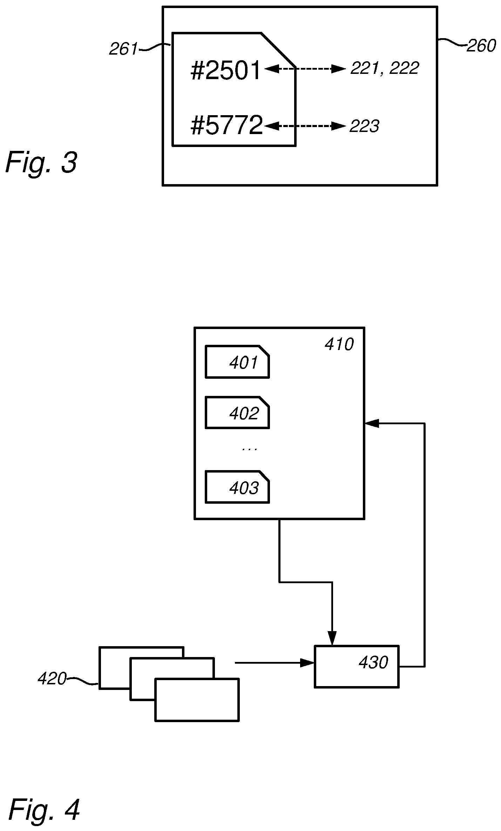

Fig. 3 schematically shows an example of an association table 260. During the scanning phase, a different identifier may be assigned to each of the detected cable heads and to each of the detected corresponding cable sockets. The identifier may be a random number. For example, the identifier may be stored together with characteristics of the cable head and/or cable, e.g., a cable type, visual label, wireless label, recognition vector and so on. For example, the identifier may be stored together with characteristics of the cable socket, e.g., a socket type, location on the socket board, visual label, wireless label, recognition vector and so on. The two identifiers of a corresponding cable head and socket may be associated with each other, e.g., stored in a table, a record, or the like.

For example, referring to Fig. 2b, once cable head 222 has been detected an identifier may be generated. In this case, the random number #20501. The identifier may be stored together with information about the cable head. For example, a cable may be detected to be connected to the cable head, in this case cable 221. The information may include information for tracking the cable head, e.g., current position and/or velocity, and connection status; in this case, the position indicates a position on the socket board, the velocity is zero and the connection status is connected. Once socket 223 has been detected, an identifier may be assigned to it, and information regarding the socket, e.g., as derived from the series of images can be stored. In this case, a random identifier #5772 is assigned to the cable socket. For a socket, relevant information may be position with respect to the socket board, connection status, etc. Once it is detected that cable head 222 and cable socket 223 are connected, e.g., plugged, this information may be stored in an association table. For example, in an association storage, an association record 261 may be written with both identifiers to indicate the association. For example, multiple association records may be stored in an association table. There are several other ways to store an association, for example, with a pointer, or by recording the information in records pertaining to the head or socket, and the like. For example, socket information may also be store together with information on the cable head. The conjunctive storing may also implicitly indicate the association. However, keeping track of cable heads and sockets separately allows objects to be tracked and information recorded as soon as it is detected, even if the association is not clear yet.

Once cable head 222 is to be plugged back in, the guidance system may detect cable head 222 in the series of images. The identity of the cable head may be obtained by recognizing the cable head, e.g., by comparing its identifying characteristics with those stored in a record stored for the cable head, and/or by object tracking. The cable head may be object-tracked from its plugged position in the cable socket all the way to its current position. The latter approach works best with a stationary camera that can keep the cable head in view, e.g., with a wide angle view. Both approaches can be combined, e.g., the cable head can be object-tracked while its identity is confirmed by comparing to its characteristics.

Once the identity of a cable head has been established of a cable head that is to be plugged in, the associated cable socket may be looked up, e.g., in record 261. At this point, the associated cable socket may be detected, e.g., directly from the series of images, or the correct socket may be selected from a plurality of detected sockets. At this point generation of the guiding signal can be done, e.g., using the information detected from the images, in particular the position of the cable socket and cable head in the images.

The image recognition algorithm used in the guiding system may be configured to be applied to one or more images received from an image sensor. The image recognition may be configured to recognize particular cable head and/or sockets but may also, or instead, object track these objects.

In an embodiment, a series of images is received from the image sensor. For example, the guiding system may receive a camera feed with a number of images per time unit, e.g., multiple images per second. The image recognition algorithm may operate on a single image at a time, but may also consider multiple images, e.g., the past few images. For example, in a first image or images a cable head and/or cable socket may be detected while plugged in. For example, in a second image or images a cable head and/or cable socket may be detected while unplugged. The second image or images may be used for generating a guiding signal. For example, in a third image or images a cable head and/or cable socket may be detected while replugged. The latter may be used as a cue to stop showing the guiding signal. Stopping the guidance signal may be done for other reasons as well, e.g., loss in the images of one of the objects, e.g., the cable head or the cable socket, or at a user request.

The image recognition may derive from the images, visual characteristics of the detected cable heads, that can be used for later recognition, and to improve tracking. For example, visual characteristics may include, e.g., a type of cable, e.g., an ethernet cable (e.g., a cat cable), a USB cable, a type of USB cable, and the like, e.g., a color of the cable, e.g., accidental characteristics, e.g., scuff marks, dirt, etc., that happen to be on the cable head. This may also be done for cable sockets, but is less important, as the cable socket stays in a fixed position with respect to the socket board.

In an embodiment, the cables may comprise or be provided with a computer readable code, e.g., an optically readable code, e.g., a barcode, a QR code, a wireless readable code, e.g., a computer readable tag, e.g., an NFC tag, etc. This may be permanent, but may also be done as a preparation for the unplugging. For example, in an embodiment, the electronic device, e.g., device 160 is installed with cables that have different identifying labels. Such labels can also be applied for the occasion. For example, in an embodiment, a user uses a sticker sheet which has multiple small stickers that each have on it different visual marks, e.g., graphical elements, e.g., triangles, lines, circles and the like, or, optically readable codes, such as barcodes and QR codes. The user can apply a different sticker to each of the cable heads that need replugging, before unplugging the cable head. In this way the visual labels are visual to the camera and can be used for object recognition and/or tracking.

In an embodiment, the user does not use special stickers but applies a bit of tape, e.g., masking tape, or the like. Such tape will naturally differ from head to head, e.g., as is torn off differently, and this assist in recognizing the cable head.

Another factor to assist in recognizing the cable heads is the signal that is on the cables themselves. For example, in an embodiment, the signal on the cables is monitored by the guiding system. Once signal is lost from a cable, this indicates that the cable is unplugged from the socket board. This information can be correlated with the series of images. The cable head that moves is most likely the one from which signal was just lost.

Another way to detect unplugging is that the number of detected unplugged cable heads has increased. A routine that detects unplugged cable heads can thus complement a routine that detects plugged in cables. Once the number of plugged in cable heads decreases or increases, the number of unplugged cable heads should increase or decrease. Note that unplugged cable head can also disappear from view.

If multiple cameras are available, especially, two stationary cameras, a depth map can be created. Detection and object-tracking of a cable head in a depth map is easier than in a 2d representation. The third dimension naturally separates the different cables and head in view.

Keeping track of the detected cable heads and cable sockets may use a so-called latent space. The latent space stores information about the detected cable heads and cable sockets. Even if an object were to disappear from view, the latent space keeps track of the cable heads and cable sockets, though of course with increasing uncertainty about their current location. Fig. 4 schematically shows an example of an embodiment of a latent space storage 410. Latent space storage 410 may be implemented in the guiding system. The latent space storage 410 stores state variables that describe the state of detected objects. Shown are state variables 401, 402 and 403; there may more than three variables, e.g., at least 20, at least 40, at least 80, etc.

For example, for each detected cable head, status variables may be assigned in the latent space storage. For example, status variables may describe its position and velocity, e.g., as floating numbers, e.g., with respect to a fixed marker, e.g., a marker on the socket board, and/or with respect to the image. A status variable may indicate connection status of the cable head; this may be a binary variable. A status variable may indicate the cable type this may be a non-continues variable, e.g., indicating a type-number. Likewise, status variables may be assigned for a detected cable socket. Such status variable may indicate the position of the cable socket, the cable socket type, etc.

Interestingly, it was found that detecting and tracking cables in addition to detecting and tracking cable heads can improve the accuracy. A cable has a larger extent and is physically restricted in its movement-by virtue of being cable-that can be learned by the updating functions (see below). For example, the latent space may track the cables as well as the cable heads. For example, status variables may indicate one or more of the position, velocity, extent, etc., of a cable, e.g., together with the corresponding cable head. For example, a position of a cable or of a cable head may be indicated as a polygon, e.g., a rectangle, indicating the position of the object in the image.

A latent space updating unit 430 may be configured to receive the series of images 420, and use the received images to make periodic updates to the state variables to reflect the information in the received images, e.g., after each received image or the like, of the state variables. Such an updating function is preferably machine learned. For example, the updating function may comprise one or more neural networks to perform the updating and thus to object-track the detected cable heads and/or cable sockets. Training an update function specifically for this task, has the advantage that the particular physical nature in which the object moves is taken into account. For example, cables can only move in particular ways, which in turn restricts how the cable head can move.

An advantage of this approach is that the guiding system always has a good approximation ready of the location of the cable heads and cable sockets. Such information can be used directly to generate a guidance signal. For example, a position of a cable head may be retrieved and used to generate an overlay at that position indicating the cable head.

Initially there may be uncertainty about the exact location of the objects. Especially if no additional camera is used or if the cable heads are occasionally obscured or disappear from view, etc. In an embodiment, the latent space and update function together implement a particle filter. For example, multiple sets of the state variables may be maintained, sets being periodically culled if they prove inaccurate based on new received images, or in which successful particles are cloned if they are successful in predicting new images.

The latent state may be used to compute various information, apart from the current position of a particular cable head or cable socket, one may use it compute other information as well, e.g., a distance of the cable head and cable socket. Such a distance may be used to trigger other functions. For example, if the distance between a cable head and the socket board is below a threshold, the guiding signal may start.

The guiding signal may be generated on the guiding system, e.g., computed by the processor system, e.g., by a guiding signal generation unit. The guiding signal is typically sent to an augmented reality headset but explained herein, e.g., a HoloLens. There are various alternatives therefore, e.g., using a handheld device such as a smartphone with AR capabilities, or, e.g., physically projecting or displaying a visual guiding signal onto the cable or cable head and onto the socket, e.g., with a light beam that has a same color for a cable or cable head and the corresponding socket.

A visual guiding signal may, e.g., comprise one or more of a color, a ring, a halo, a number, a sign, and a distinct pattern. The guiding signal may comprise navigational instructions for positioning the cable and/or cable head towards the cable socket. Before guiding an individual cable head to a cable socket, the guiding system may first assist the user in sorting the cable head into clusters.

The guiding system is useful for many types of users, e.g., for engineers who work in an industry context, e.g., field service, production, manufacturing, and warehousing, etc., for medical staff handling patient monitoring systems, for IT staff, DIY tools, products, and systems, and so on.

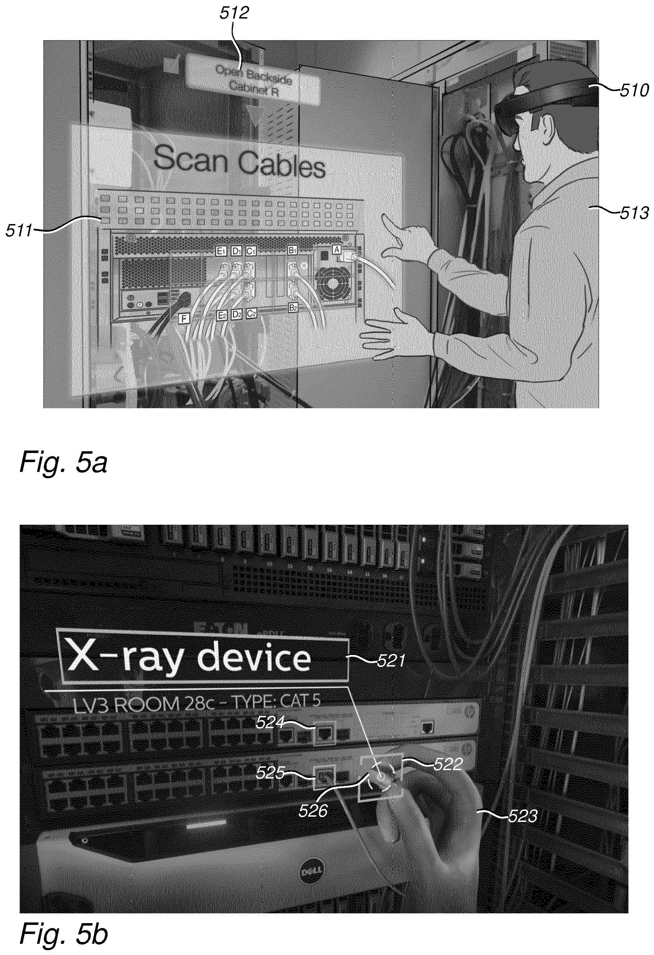

Examples of how guidance can be implemented using Augmented Reality are provided in Figs. 5a and 5b.

Fig. 5a schematically shows an example of an embodiment of augmented reality overlays 511 and 512. Fig. 5a shows a user 513 wearing a headset 510. The headset projects the augmented reality overlays over the field of view of user 513. Although overlays 511 and 512 are shown in the figure, in reality they are only visible to user 513. For example, the picture shown in Fig. 5a shows the scanning phase. In this case, the scanning phase is not transparent, e.g., it is visible to the user. This gives the user the opportunity to verify that scanning was done correctly. In this case, information panel 511 shows the progress of scanning. Optional panel 512 gives instructions; in this case instructing the user to open the cabinet.

Internally, for example, state variables may be created to represent the detected cable heads and/or the cables. State variables may also be assigned for the sockets. It can happen that the state variables are initially not accurate or even not completely assigned yet, but that this information is filled in during the unplugging. Accordingly, the scanning and unplugging phase can overlap. For example, cables attached to other cables head can obscure a further cable head from view. Cables and cable heads can obscure a cable socket, although a socket can be inferred from a cable head. Possible risk of assigning a state variables to a cable socket inferred from a plugged in cable head can be reduced by culling such variables during later updating of the state space if prediction based upon them turn out to be erroneous.

For example, in an embodiment, the system detects that cables are being disconnected from the installed unit. The cable that is disconnected can be identified via a camera, e.g., from movement detection of the object, e.g., it is detected that the technician is putting his fingers around a cable or it is detected that a cable in the technician's hand is moving, and the socket that can be identified with a camera, e.g., it becomes empty. Alternatively or in addition, the system may detect the visual distance of the cable head and socket. Now the cable and the socket are virtually visually coded, e.g., color coded, and this information may be used to provide guidance later on during replugging. When the user reinstalls the cables, e.g., via camera object/gesture recognition it may be detected that the technician's hand is approaching a cable or it is detected that a cable is in the technician's hand or it is detected that a cable is getting closer to a socket. The visual coding, e.g., color may be virtually overlaid on top, e.g., as a glow. The corresponding socket may light up similarly. Once the cable is connected again, the visual coding disappears.

In an embodiment, the system might provide navigational instructions on the best way and the optimal sequence to maneuver or position the cable while plugging the cable head in its socket. In an embodiment, the system may query system manuals or online data sources to identify the correct cable and socket in case the system was not able to capture this at the start. A snapshot of the cable connections could be made automatically when the procedure is started.

Fig. 5b schematically shows an example of an embodiment of an augmented reality overlay. In Fig. 5b the view is shown from the perspective of the user wearing an augmented reality headset. The picture a hand 523 holding a cable head 526. Cable head 526 is detected by the guiding system. In response, a virtual information panel 521 is shown in the augmented reality view that gives additional information about the cable head 526. In addition, a guiding signal 522 is shown around the cable head 526. Guiding signals are also shown around the relevant sockets. The guiding signal 524 at the socket is the same color as guiding signal 522 around cable head 526 to indicate that cable head 526 is to be plugged into the cable socket at signal 524. An additional (optional) guiding signal 525 is shown at another (not corresponding) cable socket, to indicate that cable head 526 should not be put in the socket at signal 525-in this case guiding signal 525 has another color than guiding signals 524 and 526.

In the various embodiments of the guiding system, the communication interface may be selected from various alternatives. For example, the interface may be a network interface to a local or wide area network, e.g., the Internet, an application interface (API), etc. The guiding system may have a user interface, which may include well-known elements such as one or more buttons, a keyboard, display, touch screen, etc. The user interface may use voice commands.

Storage 140 may be implemented as an electronic memory, say a flash memory, or magnetic memory, say hard disk or the like. Storage 140 may comprise multiple discrete memories together making up storage 140. Storage 140 may comprise a temporary memory, say a RAM. In the case of a temporary storage 140, storage 140 may be associated with a retrieving device to obtain data before use and to store the data in the storage, say by obtaining them over an optional network connection.

Typically, the guiding system 140 comprises a microprocessor which executes appropriate software stored at guiding system 140; for example, that software may have been downloaded and/or stored in a corresponding memory, e.g., a volatile memory such as RAM or a non-volatile memory such as Flash. An augmented reality device, and the electronic device 160 may also be equipped with microprocessors and memories. The guiding system may, in whole or in part, be implemented in programmable logic, e.g., as field-programmable gate array (FPGA). Guiding system may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Updating function 430, image recognition algorithms and object-tracking algorithms may comprise a neural network, which may be a deep convolutional network. The neural network training method for training the neural network may be a computer implemented method. The neural network, either during training and/or during applying may have multiple layers, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

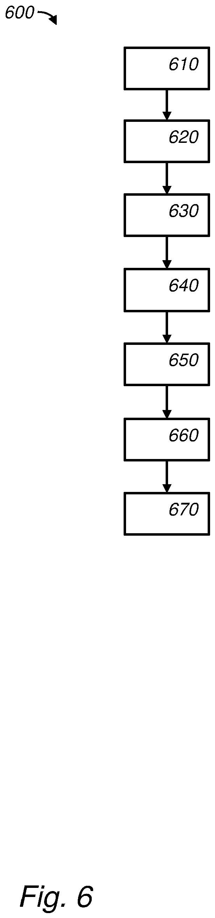

Fig. 6 schematically shows an example of an embodiment of a guiding method 600. The method is computer-implemented method and assists a user plugging multiple cable heads attached to multiple cables into corresponding multiple cable sockets. Method 600 comprises
- receiving (610) from an image sensor a series of images picturing a socket board comprising multiple sockets,
- applying (620) an image recognition algorithm to the series of images,
- detecting (630 in a first image of the series at least part of the multiple cable heads and the cable sockets in which the detected cable heads are plugged into their corresponding cable sockets,
- associating (640) the detected at least part of the multiple cable heads with the corresponding detected cable sockets in which the detected multiple cable heads are plugged,
- enabling (650) the user to remove one or more of the detected cable heads from the socket board,
- detecting (660) in a second image of the series an unplugged cable head and the associated corresponding unplugged cable socket,
- sending (670) an electronic signal to render a guiding signal guiding the detected unplugged cable head for plugging into and the associated corresponding unplugged cable socket, enabling the user to plug said cable head into its corresponding cable socket.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

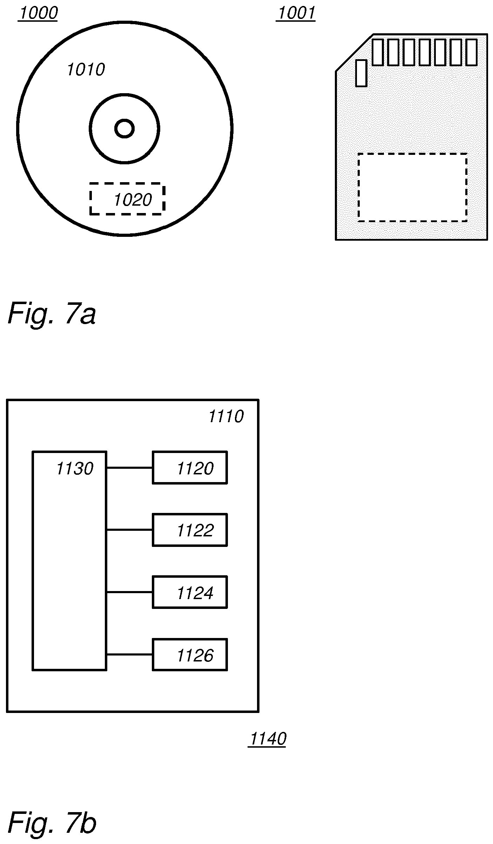

Fig. 7a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform a guiding method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said guiding method.

Fig. 7b shows in a schematic representation of a processor system 1140 according to an embodiment of a guiding system. The processor system comprises one or more integrated circuits 1110. The architecture of the one or more integrated circuits 1110 is schematically shown in Fig. 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the <claim 1> device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

As used herein, the term "non-transitory" will be understood to exclude transitory signals but to include all forms of storage, including both volatile and non-volatile memories.

While device 1140 is shown as including one of each described component, the various components may be duplicated in various embodiments. For example, the processor may include multiple microprocessors that are configured to independently execute the methods described herein or are configured to perform steps or subroutines of the methods described herein such that the multiple processors cooperate to achieve the functionality described herein. Further, where the device 1140 is implemented in a cloud computing system, the various hardware components may belong to separate physical systems. For example, the processor may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (600) to assist a user with plugging multiple cable heads attached to multiple cables into corresponding multiple cable sockets, the method comprising
- receiving (610) from an image sensor a series of images picturing a socket board comprising multiple sockets,
- applying (620) an image recognition algorithm to the series of images,
- detecting (630 in a first image of the series at least part of the multiple cable heads and the cable sockets in which the detected cable heads are plugged into their corresponding cable sockets,
- associating (640) the detected at least part of the multiple cable heads with the corresponding detected cable sockets in which the detected multiple cable heads are plugged,
- enabling (650) the user to remove one or more of the detected cable heads from the socket board,
- detecting (660) in a second image of the series an unplugged cable head and the associated corresponding unplugged cable socket,
- sending (670) an electronic signal to render a guiding signal guiding the detected unplugged cable head for plugging into and the associated corresponding unplugged cable socket, enabling the user to plug said cable head into its corresponding cable socket.

2. A computer-implemented method in which the socket board is comprised in a side of an electronic device.

3. A computer-implemented method as in claim 2, wherein the user is enabled to
- unplug the multiple cable heads from the socket board of the electronic device,
- replace the electronic device,
- re-plug the multiple cable heads that were previously unplugged into a socket board of the replaced electronic device guided by the rendered guiding signal.

4. A computer-implemented method as in any one of the preceding claims, comprising
- object tracking the detected multiple cable heads and/or cables and/or the detected cable sockets in the series of images using an object tracking algorithm.

5. A computer-implemented method as in any one of the preceding claims, comprising
- detecting a loss of signal from a plugged in cable head in conjunction with detecting the unplugged cable head and the associated corresponding unplugged cable socket.

6. A computer-implemented method as in any one of the preceding claims, wherein rendering a guiding signal comprises
- physically projecting a visual guiding signal onto the cable or cable head and onto the socket, wherein the light beam has a same color for a cable or cable head and the corresponding socket, and/or
- virtually projecting a visual guiding signal onto the cable or cable head and onto the socket, in an augmented reality device of the user, e.g., an augmented reality headset, or an augmented reality capable handheld device, and/or
- playing an auditive guiding signal indicating a cable socket.

7. A computer-implemented method as in any one of the preceding claims, wherein the guiding signal is a visual guiding signal, e.g., comprising one or more of a color, a ring, a halo, a number, a sign, and a distinct pattern.

8. A computer-implemented method as in any one of the preceding claims, comprising
- detecting in a third image of the series that the detected unplugged cable head and the associated corresponding unplugged cable socket are re-plugged, and
- ceasing the rendering of the guiding signal.

9. A computer-implemented method as in any one of the preceding claims, comprising
- maintaining a latent space, the latent space comprising a set of variables for each of the detected cable head and/or each of the detected cable sockets, a set of variables representing one or more of a location and a connection state,
- applying a machine-learned updating function to one or more of the images of the series to update the latent space for object tracking the detected cable heads and/or cable sockets.

10. A computer-implemented method as in any one of the preceding claims, comprising
- enabling a user to label one or more cables and/or cable heads with a visual or electronic wireless label,
- detecting a cable and/or cable head comprising detecting the visual or electronic wireless label.

11. A computer-implemented method as in any one of the preceding claims, wherein
- the image sensor comprises a camera integrated in an augmented reality device, and/or
- the image sensor comprises a fixed camera for image sensing the socket board and/or the cables and/or cable heads.

12. A computer-implemented method as in any one of the preceding claims, comprising detecting in the image series,
- a disconnecting of a cables head from a cable socket, and/or
- a movement of the cable and/or cable head,
- a finger on or around a cable, and/or
- a moving hand holding a cable head, and/or
- an empty socket, and/or
- a re-plugging of a cable head, and/or
- a hand on or approaching a cable and/or cable head.

13. A computer-implemented method as in any one of the preceding claims, comprising determining a distance of the cable head and cable socket from the image series.

14. A computer-implemented method as in any one of the preceding claims, comprising repeatedly storing a snap-shot of the socket board.

15. A computer-implemented method as in any one of the preceding claims, comprising
- first: partitioning the cables and/or cable heads into clusters, and rendering the same guiding signal for all cables and/or cable heads in the cluster,
- enabling the user to physically partition the cables and/or cable heads into the same cluster,
- second: rendering a different guiding signal for the cables and/or cable heads in the cluster.

16. A guiding system for guiding the plugging of multiple cable heads attached to multiple cables into corresponding multiple cable sockets, the system comprising
- an image sensor interface configured to receive a series of images picturing a socket board comprising multiple sockets,
- a rendering interface for sending a guiding signal for rendering, and
- a processor system configured for
- applying an image recognition algorithm to the series of images,
- detecting in a first image of the series at least part of the multiple cable heads and the cable sockets in which the detected cable heads are plugged into their corresponding cable sockets,
- associating the detected at least part of the multiple cable heads with the corresponding detected cable sockets in which the detected multiple cable heads are plugged,
- enabling the user to remove one or more of the detected cable heads from the socket board,
- detecting in a second image of the series an unplugged cable head and the associated corresponding unplugged cable socket,
- sending an electronic signal over the rendering interface to render a guiding signal for plugging into and the associated corresponding unplugged cable socket, enabling the user to plug said cable head into its corresponding cable socket.

17. A transitory or non-transitory computer readable medium (1000) comprising data (1020) representing instructions, which when executed by a processor system, cause the processor system to perform the method according to any one of claim 1-15.
